# EUROPÄISCHE PATENTANMELDUNG

(11) **EP 2 945 128 A1**
(43) Veröffentlichungstag der Anmeldung: **18.11.2015**
(21) Anmeldenummer: 15161576.2
(22) Anmeldetag: 30.03.2015
(51) Int. Cl.: G07C 5/00, B60W 40/09, G06Q 10/06

(54) **Vorrichtungen, Verfahren und Computerprogramme zur Verarbeitung und Darstellung von Telemetriedaten**

(30) Priorität: 14.05.2014 DE 102014209096
(71) Anmelder: Volkswagen Aktiengesellschaft, 38440 Wolfsburg (DE)
(72) Erfinder: Oswald, Patrick, 10787 Berlin (DE); Richter, Björn, 16775 Großwoltersdorf OT Zernikow (DE)

(57) **Zusammenfassung**

Ausführungsbeispiele schaffen eine Vorrichtung, ein Verfahren und ein Computerprogramm zur Verarbeitung von Telemetriedaten und eine Vorrichtung, ein Verfahren und ein Computerprogramm zur Darstellung von Telemetriedaten. Die Vorrichtung (10) zur Verarbeitung von Telemetriedaten von Fahrzeugen, umfasst eine Erfassungseinrichtung (12) zur Erfassung von Telemetriedaten einer Mehrzahl von Fahrzeugen, eine Recheneinrichtung (14) zur Berechnung von Auswertedaten basierend auf den Telemetriedaten und basierend auf einem Auswertekriterium und eine Bereitstellungseinrichtung (16) zur Bereitstellung der Auswertedaten. Die Vorrichtung (20) zur Darstellung von Telemetriedaten in einem Fahrzeug (100) umfasst eine Erfassungseinrichtung (22) zur Erfassung von Telemetriedaten des Fahrzeugs (100), eine Kommunikationseinrichtung (24) zum Empfangen von Auswertedaten, die auf Telemetriedaten eines oder mehrerer anderer Fahrzeuge basieren und eine Darstellungseinrichtung (26) zur Darstellung der Auswertedaten basierend auf den Telemetriedaten des Fahrzeugs (100).

## Beschreibung

Die vorliegende Erfindung betrifft eine Vorrichtung, ein Verfahren und ein Computerprogramm zur Verarbeitung von Telemetriedaten gemäß den Ansprüchen 1, 13 und 15, und eine Vorrichtung, ein Verfahren und ein Computerprogramm zur Darstellung von Telemetriedaten gemäß den Ansprüchen 1, 14 und 15.

### Beschreibung

Aus dem Stand der Technik sind mehrere Varianten der Informationsdarstellung und - verarbeitung in Kraftfahrzeugen (Kfz), wie beispielsweise Autos, Lastkraftwagen, Zügen, aber auch Zweirädern etc. bekannt. Dabei werden beispielsweise verschiedene Sensoren und Überwachungssysteme benutzt, um Daten innerhalb eines Fahrzeugs und unter Ausnutzung der vorhandenen Systeme zu erfassen und auszuwerten.

Beispielsweise aus der WO2008/110731 sind ein Verfahren und ein System zur Fahrstilüberwachung und -analyse bekannt. Dabei wird der Fahrstil des Fahrers anhand von Überwachungsdaten, wie beispielsweise der Position oder des Ortes des Fahrzeugs sowie Überwachungsparameter von den Komponenten des Fahrzeugs, erfasst und ausgewertet. Dem Fahrer kann dann eine Rückmeldung über seinen Fahrstil zur Verfügung gestellt werden, die es ihm erlauben beispielsweise den Kraftstoffverbrauch des Kraftfahrzeugs zu verbessern. Entsprechende Auswertungen können dabei beispielsweise auf Basis der Drehzahl des Motors, der Fahrgeschwindigkeit, der Beschleunigung, des Bremsverhaltens, des Kraftstoffverbrauchs, usw. bereitgestellt werden.

Die Darstellung solcher Daten in einem Kraftfahrzeug kann beispielsweise über ein in dem Fahrzeug angebrachtes Display oder einen Monitor erfolgen. Darüber hinaus besteht die Möglichkeit, beispielsweise über Funkschnittstellen, die z.B. durch Mobilfunkgeräte bereitgestellt werden können, die Daten zur Auswertung zu übertragen, sodass diese dann auch über eine Internetseite, mittels einer Datei, usw. verfügbar gemacht werden. Insofern können die Daten auch nach der Fahrt durch einen Fahrer ausgewertet bzw. eingesehen werden.

Konventionelle Systeme können so Fahrzeugdaten verfügbar machen und einem Betreiber des Fahrzeugs die Möglichkeit bieten, die Daten einzusehen und Rückschlüsse auf seinen Fahrstil bzw. Verbesserungsmöglichkeiten des eigenen Fahrstils zu ziehen. Solche Systeme sind dann zumeist auf die Daten des jeweiligen Fahrzeugs bzw. des Fahrers begrenzt, sodass sich etwaige Verbesserungsvorschläge oder Verbesserungsmöglichkeiten relativ zu den von dem Fahrzeug und dem Fahrer erfassten Daten ergeben.

Eine Aufgabe der vorliegenden Erfindung kann daher darin gesehen werden, ein verbessertes Konzept zur Verbesserung des Fahrverhaltens eines Betreibers eines Fahrzeugs zu schaffen.

Diese Aufgabe wird gelöst gemäß den anhängigen unabhängigen Ansprüchen.

Es ist ein Kerngedanke von Ausführungsbeispielen Telemetriedaten von mehreren Fahrzeugen zu erfassen und diese basierend auf einem Auswertekriterium auszuwerten. Die so ausgewerteten Daten können einem Betreiber eines Fahrzeugs bereitgestellt werden, sodass dieser sein Fahrverhalten entsprechend verbessern kann. Die Erfassung der Daten von mehreren Fahrzeugen erlaubt dabei beispielsweise Fahrzeugdaten auf der gleichen Strecke auszuwerten, Fahrzeuge des gleichen oder ähnlichen Typs miteinander zu vergleichen, Fahrverhalten verschiedener Fahrer oder Fahrzeuge einander gegenüber zu stellen, usw. Wenn beispielsweise das Fahrverhalten hinsichtlich eines Kraftstoffverbrauchs verbessert werden soll, so kann der Kraftstoffverbrauch gleicher Fahrzeuge auf der gleichen Strecke miteinander verglichen werden. Aus diesem Vergleich können sich beispielsweise Unterschiede im Beschleunigungsverhalten, hinsichtlich der Schaltzeitpunkte, des Bremsverhaltens usw. ergeben. Stehen demnach die Daten mehrerer Fahrer des gleichen oder ähnlichen Fahrzeugs zur Verfügung, so kann beispielsweise eine Information über ein Schaltverhalten für einen geringsten Kraftstoffverbrauch auf der jeweiligen Strecke an die Fahrer bereitgestellt werden.

Ausführungsbeispiele schaffen daher eine Vorrichtung zur Verarbeitung von Telemetriedaten von Fahrzeugen. Die Vorrichtung umfasst eine Erfassungseinrichtung zur Erfassung von Telemetriedaten einer Mehrzahl von Fahrzeugen, bzw. von wenigstens zwei Fahrzeugen. Die Vorrichtung umfasst ferner eine Recheneinrichtung zur Berechnung von Auswertedaten basierend auf den Telemetriedaten und basierend auf einem Auswertekriterium. Die Vorrichtung umfasst ferner eine Bereitstellungseinrichtung zur Bereitstellung der Auswertedaten. Ausführungsbeispiele können so unter Umständen ermöglichen, umfangreiche Statistiken über Telemetriedaten und Fahrverhalten verschiedener Fahrer zu erfassen, und so Verbesserungen oder Optimierungen vorzunehmen, die unter Teststreckenbedingungen oder basierend auf Telemetriedaten eines einzelnen Fahrzeugs nicht unbedingt möglich sind.

Ausführungsbeispiele schaffen darüber hinaus eine Vorrichtung zur Darstellung von Telemetriedaten in einem Fahrzeug. Die Vorrichtung umfasst eine Erfassungseinrichtung zur Erfassung von Telemetriedaten des Fahrzeugs und eine Kommunikationseinrichtung zum Empfangen von Auswertedaten, die auf Telemetriedaten eines oder mehrerer anderer Fahrzeuge basieren. Die Vorrichtung umfasst ferner eine Darstellungseinrichtung zur Darstellung der Auswertedaten basierend auf den Telemetriedaten des Fahrzeugs. Ausführungsbeispiele können so eine Darstellung von Telemetriedaten in einem Fahrzeug ermöglichen, die eine Gegenüberstellung zu Telemetriedaten oder Auswertedaten anderer Fahrzeuge zeigt. Einem Fahrer oder Betreiber eines solchen Fahrzeugs kann somit die Möglichkeit geboten werden, seinen eigenen Fahrstil oder sein Fahrverhalten bzw. Leistungswerte des eigenen Fahrzeugs mit anderen, insbesondere hinsichtlich eines Auswertekriteriums verbesserten Fahrstilen, zu vergleichen.

In weiteren Ausführungsbeispielen kann die Bereitstellungseinrichtung der Vorrichtung zur Verarbeitung von Telemetriedaten ausgebildet sein, um die Auswertedaten zumindest einem der Mehrzahl von Kraftfahrzeugen bereitzustellen, um einem Fahrer oder Betreiber dieses Fahrzeugs die beschriebene Auswertung und Verbesserung zu ermöglichen. In manchen Ausführungsbeispielen kann das Auswertekriterium zumindest ein Element der Gruppe von Kraftstoffverbrauch, Verschleiß einer oder mehrerer Fahrzeugkomponenten oder Fahrsicherheit umfassen. Insofern können Ausführungsbeispiele einem Fahrer ermöglichen seinen Fahrstil oder sein Fahrverhalten hinsichtlich des Kraftstoffverbrauchs, des Verschleißes einer oder mehrerer Fahrzeugkomponenten, wie beispielsweise der Bremsbeläge oder der Reifen, bzw. der Fahrsicherheit allgemein ermöglichen. Prinzipiell sind Ausführungsbeispiele nicht auf diese Auswertekriterien eingeschränkt, es sind vielerlei Kriterien denkbar, die aufgrund der Erfassung der Telemetriedaten einer Mehrzahl von Fahrzeugen verbessert werden können.

Beispielsweise seien an dieser Stelle auch Mitfahraktivitäten genannt, die aufgrund der Erfassung der Telemetriedaten, beispielsweise regelmäßig gefahrener Strecken der Mehrzahl von Fahrzeugen, verbessert werden könnten. Wenn beispielsweise durch Erfassung der Telemetriedaten bekannt ist, welche Fahrzeuge zu welchen Zeiten die gleichen Strecken zurücklegen, so kann einem Fahrer Information über andere Fahrzeuge bereitgestellt werden, ein Bilden von Fahrgemeinschaften dadurch gefördert werden. Insgesamt können Ausführungsbeispiele so den Vorteil bieten, dass nicht nur der Kraftstoffverbrauch, der Verschleiß, die Fahrsicherheit, usw. von einzelnen Fahrzeugen verbessert werden, sondern auch der Mehrzahl von Fahrzeugen insgesamt, beispielsweise Erfassen und Verteilen der Information, die dann ein Bilden von Fahrgemeinschaften erlaubt. In der Folge dessen ist es daher denkbar, dass die Anzahl der Fahrzeuge auf den Verkehrsstraßen reduziert, Verkehrsstaus vermieden, und der insgesamte Kraftstoffverbrauch sowie die Straßenabnutzung reduziert werden könnten.

In weiteren Ausführungsbeispielen kann die Bereitstellungseinrichtung der Vorrichtung zur Verarbeitung der Telemetriedaten von Fahrzeugen auch ausgebildet sein, um die Auswertedaten einem Servicezentrum oder einer Werkstatt für zumindest eines der Mehrzahl von Fahrzeugen bereitzustellen. In analoger Weise können Ausführungsbeispiele insofern dafür sorgen, dass weitreichende Analysen über das Fahrverhalten, den Verschleiß, den Kraftstoffverbrauch usw. von Fahrzeugen, z.B. auch einer ganzen Fahrzeugflotte, erfasst werden können, die bereits im Vorfeld Hinweise an Servicezentren oder Werkstätten liefern können. Dabei ist es beispielsweise denkbar Ersatzteile frühzeitig zu beschaffen, Forschungs- und Weiterentwicklungsaktivitäten gezielt in Richtung etwaig erfasster Schwachstellen zu richten, insgesamt den Verschleiß zu reduzieren, eine Haltbarkeit, Leistungsfähigkeit usw. zu verbessern.

In Ausführungsbeispielen können die Telemetriedaten dabei vielerlei Informationen umfassen. Beispielsweise können Telemetriedaten Informationen über zumindest ein Element der Gruppe von Fahrverhalten, Beschleunigungsverhalten, Bremsverhalten, Schaltverhalten, Kraftstoffverbrauch, Kurvenbeschleunigungen, G-Kräfte (Gravitationskräfte/Beschleunigungskräfte), Sicherheitsabstandsverhalten, Betriebseffizienz, Fehlermeldungen, Ortsinformationen, Streckeninformationen, usw. umfassen. Die Erfassungseinrichtung der Vorrichtung zur Verarbeitung der Telemetriedaten kann dabei ausgebildet sein, um die Telemetriedaten von einem in ein Fahrzeug integrierten Diagnosesystem zu erhalten, z.B. einem On-Board-DiagnoseSystem (engl. on-board im Sinne von fahrzeugeigen), wobei die Daten dann über entsprechend ausgebildete Schnittstellen, die im Folgenden noch näher erläutert werden, übertragen bzw. erfasst werden können.

In weiteren Ausführungsbeispielen kann die Darstellungseinrichtung der Vorrichtung zur Darstellung der Telemetriedaten ausgebildet sein, um die Telemetriedaten des Fahrzeugs und die Telemetriedaten der ein oder mehreren anderen Fahrzeuge vergleichend darzustellen. Eine vergleichende Darstellung kann dabei unter Umständen vorteilhaft sein, da sie einem Betreiber oder Fahrer des Fahrzeugs ermöglichen kann, direkte Rückschlüsse auf eine Verbesserungsmöglichkeit seines Fahrverhaltens zu ziehen. Beispielsweise können derzeit verwendete Schaltzeiten oder Schaltpunkte solchen Schaltzeiten oder Schaltpunkten gegenübergestellt werden, die mit einem geringeren Kraftstoffverbrauch verbunden sind. Ein Betreiber oder ein Fahrer eines Fahrzeugs kann insofern direkt auf eine vorzunehmende Veränderung schließen, die in einen geringeren Kraftstoffverbrauch resultieren würde. In weiteren Ausführungsbeispielen ist auch eine automatisierte Übertragung denkbar, beispielsweise könnten in einem Automatikgetriebe die Schaltzeitpunkte basierend auf den Daten die von anderen Fahrzeugen auf der gleichen Strecke erfasst wurden, optimiert werden. Insofern kann in Ausführungsbeispielen ein Vergleich der Telemetriedaten des betrachteten Fahrzeugs mit den Telemetriedaten anderer Fahrzeuge dazu verwendet werden, Fahrparameter zu verbessern.

Folglich basieren manche Ausführungsbeispiele auch auf dem Kerngedanken, dass Fahrer und Fahrzeugeinstellungen basierend auf Daten anderer Fahrzeuge verbessert werden können.

In weiteren Ausführungsbeispielen ist die Kommunikationseinrichtung der Vorrichtung zur Darstellung der Telemetriedaten ausgebildet, um die Telemetriedaten des Fahrzeugs an eine Datenverarbeitungsvorrichtung gemäß der obigen Beschreibung zu übertragen. Die Auswertung kann dann wie bereits oben beschrieben in der Datenverarbeitungsvorrichtung erfolgen. In manchen Ausführungsbeispielen kann die Kommunikationseinrichtung der Vorrichtung zur Darstellung der Telemetriedaten auch ausgebildet sein, um die Telemetriedaten des Fahrzeugs schnurlos an ein Mobilfunkgerät und über das Mobilfunkgerät an die Datenverarbeitungsvorrichtung zu übertragen. In anderen Worten kann in manchen Ausführungsbeispielen Schnurlos-Technologie, wie beispielsweise aus dem zellularen Mobilfunk, eingesetzt werden, um die Telemetriedaten des Fahrzeugs aufwandsgünstig an die Datenverarbeitungsvorrichtung zu übertragen. Beispielsweise können die Telemetriedaten aus dem Fahrzeug zunächst über eine kurzreichweitige Schnurlos-Verbindung, wie z.B. Bluetooth, an das Mobilfunkgerät und von dort über zellularen Mobilfunk an eine entsprechende Datenverarbeitungsvorrichtung weitergeleitet werden. Die Auswertedaten können in umgekehrter Richtung ebenfalls zurück an das Fahrzeug übertragen werden.

In weiteren Ausführungsbeispielen kann die Vorrichtung zur Darstellung der Telemetriedaten ferner eine Auswerteeinrichtung umfassen. Die Auswerteeinrichtung kann ausgebildet sein, um die Telemetriedaten des Fahrzeugs und die Telemetriedaten bzw. Auswertedaten der ein oder mehreren anderen Fahrzeuge zu vergleichen und basierend auf den Telemetriedaten des Fahrzeugs Informationen hinsichtlich eines verbesserten Fahrverhaltens für das Fahrzeug zu bestimmen. In anderen Worten kann die Auswertung zumindest teilweise auch in dem Fahrzeug durchgeführt werden, in dem die entsprechenden Auswertedaten oder darauf basierende Ergebnisse dann dargestellt werden. Insofern kann der Fahrer oder ein Betreiber des Fahrzeugs die Möglichkeit haben, ein Auswahlkriterium aus einem Katalog von Auswahlkriterien auszuwählen, sodass hier auch eine bedarfsoptimierte Darstellung oder Auswertung möglich ist. Beispielsweise kann eine solche Datenübertragung und/oder -auswertung näherungsweise in Echtzeit, d.h. innerhalb einer kurzen Zeitspanne erfolgen, sodass beispielsweise eine Streckenoptimierung während des Befahrens einer Strecke durchgeführt werden kann. In anderen Worten kann basierend auf der Erkenntnis, dass ein anderes Fahrzeug eine Strecke zwischen den Punkten a und b in der unmittelbaren Vergangenheit in einer relativ kurzen Zeit zurückgelegt hat, eine entsprechende Routeninformation an den Fahrer gegeben werden, Staus oder Behinderungen können so umgangen werden.

Wie bereits oben angedeutet kann auch die Auswerteeinrichtung der Vorrichtung zur Darstellung der Telemetriedaten ausgebildet sein, um aus den Telemetriedaten der ein oder mehreren anderen Fahrzeuge Kraftstoffverbrauchswerte zu ermitteln. Basierend auf den Telemetriedaten des Fahrzeugs und den Kraftstoffverbrauchswerten kann die Auswerteeinrichtung Information über verbesserte Schaltpunkte für das Fahrzeug ermitteln. Entsprechend kann die Darstellungseinrichtung ausgebildet sein, um die Information über die verbesserten Schaltpunkte entsprechend darzustellen und einem Betreiber oder auch einem Getriebe zugänglich zu machen.

Ausführungsbeispiele schaffen darüber hinaus ein Fahrzeug mit einer Vorrichtung zur Darstellung der Auswertedaten wie oben beschrieben.

Ausführungsbeispiele schaffen ferner ein Verfahren zur Verarbeitung von Telemetriedaten von Fahrzeugen. Das Verfahren umfasst ein Erfassen von Telemetriedaten einer Mehrzahl von Fahrzeugen und ein Berechnen von Auswertedaten basierend auf den Telemetriedaten und basierend auf einem Auswertekriterium. Das Verfahren umfasst ferner ein Bereitstellen der Auswertedaten, z.B. an ein oder mehrere Fahrzeuge.

Ausführungsbeispiele schaffen ferner ein Verfahren zur Darstellung von Telemetriedaten in einem Fahrzeug. Das Verfahren umfasst ein Erfassen von Telemetriedaten des Fahrzeugs und ein Empfangen von Auswertedaten, die auf Telemetriedaten eines oder mehrerer anderer Fahrzeuge basieren. Das Verfahren umfasst ferner ein Darstellen der Auswertedaten basierend auf den Telemetriedaten des Fahrzeugs.

Ausführungsbeispiele schaffen ferner ein Computerprogramm zur Durchführung eines oder mehrerer der oben beschriebenen Verfahren, wenn das Computerprogramm auf einem Computer, einem Prozessor oder einer programmierbaren Hardwarekomponente abläuft. Ausführungsbeispiele schaffen ferner ein Speichermedium, das mittels eines Computers lesbar ist, und das entsprechende Computerinstruktionen umfasst, die, wenn sie auf einem Computer, einem Prozessor oder einer programmierbaren Hardwarekomponente ausgeführt werden, einem der oben beschriebenen Verfahren entsprechen.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen
Fig. 1 ein Blockdiagramm eines Ausführungsbeispiels einer Vorrichtung zur Verarbeitung von Telemetriedaten eines Fahrzeugs;
Fig. 2 ein Blockdiagramm eines Ausführungsbeispiels einer Vorrichtung zur Darstellung von Telemetriedaten in einem Fahrzeug;
Fig. 3 eine Übersicht eines Kommunikationsablaufs und der Möglichkeiten in Ausführungsbeispielen;
Fig. 4 eine Darstellungseinrichtung in einem Ausführungsbeispiel;
Fig. 5 eine Darstellung verschiedener Auswertedaten bzw. Auswertekriterien in einem Ausführungsbeispiel;
Fig. 6 eine Darstellung eines Symbols für einen Fahrer/ein Fahrzeug in einem Ausführungsbeispiel;
Fig. 7 eine Darstellung einer Rangordnung für einen Fahrer eines Fahrzeugs in einem Ausführungsbeispiel;
Fig. 8 eine Übersicht über verschiedene Auswertekriterien in einem Ausführungsbeispiel;
Fig. 9 verschiedene Auswertedaten zum Sicherheitsabstand und zum Kraftstoffverbrauch in einem Ausführungsbeispiel;
Fig. 10 zwei Darstellungen zur Auswertung der Gravitationskräfte und des optimalen Schaltpunktes in einem Ausführungsbeispiel;
Fig. 11 eine Darstellung einer Gegenüberstellung zweier Fahrverhalten in einem Ausführungsbeispiel;
Fig. 12 eine Darstellung verschiedener Fahrverhalten gemäß einer Rangordnung in einem Ausführungsbeispiel;
Fig. 13 eine Darstellung von "Belohnungen" in einem Ausführungsbeispiel;
Fig. 14 ein Ablaufdiagramm eines Ausführungsbeispiels eines Verfahrens zur Verarbeitung von Telemetriedaten von Fahrzeugen; und
Fig. 15 ein Ablaufdiagramm eines Verfahrens zur Darstellung von Telemetriedaten in einem Fahrzeug.

Bei der nachfolgenden Beschreibung der beigefügten Figuren, die Ausführungsbeispiele zeigen, bezeichnen gleiche Bezugszeichen, gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt da-zwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

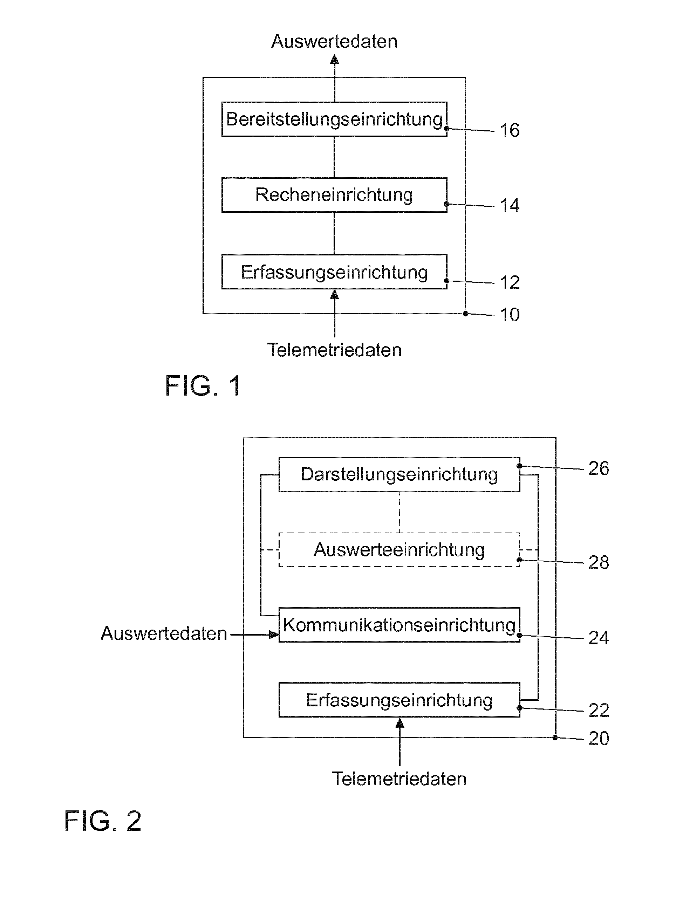

Im Folgenden werden einige Ausführungsbeispiele anhand der Figuren näher erläutert. Fig. 1 zeigt eine Vorrichtung 10 zur Verarbeitung von Telemetriedaten von Fahrzeugen. Die Vorrichtung 10 umfasst eine Erfassungseinrichtung 12 zur Erfassung von Telemetriedaten einer Mehrzahl von Fahrzeugen. Die Erfassungseinrichtung kann in Ausführungsbeispielen einer Schnittstelle entsprechen, die mit entsprechenden Sensoren oder Datenverarbeitungseinrichtungen des Fahrzeugs gekoppelt oder koppelbar ist, beispielsweise über ein oder mehrere Schurlosverbindungen, via Internet, über ein oder mehrere Computer/Router/Server, usw. Eine solche Kopplung ist beispielsweise auch über Fahrzeugbusse denkbar, wie beispielsweise den CAN-Bus (von Englisch "Controller Area Network"), die solche Daten zur Übertagung liefern können. In anderen Ausführungsbeispielen kann die Erfassungseinrichtung 12 mit ein oder mehreren Sensoren kommunizieren, die zur Ermittlung der Telemetriedaten dienen. Solche Telemetriedaten können beispielsweise von Beschleunigungssensoren, Schaltsensoren, Kraftstoffverbrauchsensoren, Bremssensoren, Abstandsensoren, Durchlaufsensoren, Reifendrucksensoren, usw. erfasst werden und dann an die Erfassungseinrichtung 12 übertragen werden. Ausführungsbeispiele sind dabei nicht auf bestimmte Sensoren oder Schnittstellen eingeschränkt, insofern soll die Bezeichnung Telemetriedaten jegliche Daten umfassen, die in einem Fahrzeug oder an dessen Komponenten gemessen bzw. erfasst werden können.

Wie die Fig. 1 zeigt, umfasst die Vorrichtung 10 ferner eine Recheneinrichtung 14, die mit der Erfassungseinrichtung 12 gekoppelt ist. Die Recheneinrichtung 14 ist zur Berechnung von Auswertedaten ausgebildet. Die Auswertedaten werden basierend auf den Telemetriedaten und basierend auf einem Auswertekriterium berechnet oder ermittelt. Die Recheneinrichtung 14 kann insofern als Computer, Prozessor oder programmierbare Hardwarekomponente implementiert sein. In manchen Ausführungsbeispielen kann die Recheneinrichtung 14 auch als Software oder Computerprogramm implementiert sein, das eine entsprechende Berechnung durchführt, wenn auf einem Prozessor, einem Computer oder einer programmierbaren Hardwarekomponente ausgeführt wird. Die Vorrichtung 10 umfasst ferner eine Bereitstellungseinrichtung 16 zur Bereitstellung der Auswertedaten, die mit der Recheneinrichtung 14 gekoppelt ist. Die Bereitstellungseinrichtung 16 kann wiederrum eine Schnittstelle sein, an der über entsprechende Datenverbindungen die Auswertedaten bereitgestellt werden, z.B. an ein Fahrzeug. In manchen Ausführungsbeispielen ist die Vorrichtung 10 als Computer oder Server implementiert, der an zentraler Stelle die Telemetriedaten von mehreren Fahrzeugen empfängt, verarbeitet und entsprechende Auswertedaten zurückliefert. In einigen Ausführungsbeispielen können daher die Bereitstellungseinrichtung 16 und die Erfassungseinrichtung 12 als eine Schnittstelle implementiert sein.

Die Auswertedaten können unter Umständen in den einzelnen Fahrzeugen weiter verwendet oder angezeigt werden. Insofern kann die Bereitstellungseinrichtung 16 auch ausgebildet sein, um die Auswertedaten zumindest einem der Mehrzahl von Fahrzeugen bereitzustellen. Als Fahrzeuge kommen alle denkbaren Fahrzeuge, wie Kraftfahrzeuge oder Lastkraftfahrzeuge, aber auch Zweiräder, wie Motorräder oder Fahrräder, in Betracht. Wie die Fig. 1 weiter zeigt ist die Bereitstellungseinrichtung 16 mit der Recheneinrichtung 14 gekoppelt. Insofern können die Auswertedaten an entsprechende Datennutzer oder Datenweiterverarbeitungsentitäten bereitgestellt werden.

In Ausführungsbeispielen kann das Auswertekriterium zumindest ein Element der Gruppe von Kraftstoffverbrauch, Verschleiß einer oder mehrerer Fahrzeugkomponenten oder Fahrsicherheit umfassen. Ausführungsbeispiele sollen dabei nicht auf eines dieser Auswertekriterien beschränkt sein, es gibt vielerlei Auswertekriterien, die an dieser Stelle denkbar sind. Generell sind Auswertekriterien denkbar, die sich auf eine ökologische, effiziente und/oder sichere Fahrweise beziehen, wobei dann jeweils entsprechende Telemetriedaten zur Auswertung herangezogen werden können. Fig. 2 zeigt eine Vorrichtung 20 zur Darstellung von Telemetriedaten in einem Fahrzeug. Die Vorrichtung umfasst eine Erfassungseinrichtung 22, zur Erfassung von Telemetriedaten des Fahrzeugs. Die Erfassungseinrichtung 22 kann hier einer Schnittstelle entsprechen, die beispielsweise mit einem Bus eines Fahrzeugs gekoppelt ist. Eine solche Kopplung ist über Fahrzeugbusse denkbar, wie beispielsweise den CAN-Bus, über den solche Daten von vielerlei Fahrzeugkomponenten bezogen oder übertragen werden können. In anderen Ausführungsbeispielen kann die Erfassungseinrichtung 22 mit ein oder mehreren Sensoren kommunizieren, die zur Ermittlung der Telemetriedaten dienen. Solche Telemetriedaten können beispielsweise von Beschleunigungssensoren, Schaltsensoren, Kraftstoffverbrauchsensoren, Bremssensoren, Abstandssensoren, Durchlaufsensoren, Reifendrucksensoren, usw. erfasst werden und dann an die Erfassungseinrichtung 22 übertragen werden, z.B. über fahrzeuginterne Busse oder Leitungen. Ausführungsbeispiele sind dabei nicht auf bestimmte Sensoren oder Schnittstellen eingeschränkt, insofern soll die Bezeichnung Telemetriedaten jegliche Daten umfassen, die in einem Fahrzeug oder an dessen Komponenten gemessen bzw. erfasst werden können.

Die Erfassungseinrichtung 22 kann insofern auch mit einem oder mehreren Sensoren gekoppelt sein, um die Telemetriedaten des Fahrzeugs zu erfassen. Die Vorrichtung 20 umfasst ferner eine Kommunikationseinrichtung 24, die zum Empfangen von Auswertedaten ausgebildet ist. Die Auswertedaten, wie oben beschrieben, basieren auf Telemetriedaten eines oder mehrerer anderer Fahrzeuge. Wie die Fig. 2 zeigt, sind die Erfassungseinrichtung 22 und die Kommunikationseinrichtung 24 mit einer Darstellungseinrichtung 26 gekoppelt, die zur Darstellung der Auswertedaten basierend auf den Telemetriedaten des Fahrzeugs ausgebildet ist. In Ausführungsbeispielen kann die Kommunikationseinrichtung 24 beispielsweise zur Kommunikation über Mobilfunk, wie zellularer Mobilfunk usw. ausgebildet sein. Insofern kann die Kommunikationseinrichtung 24 auch eine Schnittstelle zu einem Mobilfunkgerät bilden, beispielsweise über einen Schnurlosstandard wie Bluetooth.

In anderen Worten ist es in Ausführungsbeispielen denkbar, dass die Kommunikationseinrichtung 24 zunächst schnurlos mit einem Mobilfunkgerät kommuniziert und das Mobilfunkgerät eine entsprechende Schnittstelle zum Mobilfunk und damit in das Internet oder zu einem Server bzw. einer Vorrichtung 10 bereitstellt. Insofern ist es möglich die Auswertedaten, die auf Telemetriedaten zumindest eines anderen Fahrzeugs basieren, an die entsprechende Vorrichtung 20 zu übertragen. Die Darstellungseinrichtung 26 kann dann in Ausführungsbeispielen einem Display, einem Monitor oder einem Instrument in dem Fahrzeug entsprechen. In manchen Ausführungsbeispielen ist es auch denkbar, dass das Display einem Mobilfunkgerät, einem Navigationsgerät, usw. entspricht. Insofern kommen in der Vorrichtung 20 die Auswertedaten von anderen Fahrzeugen und die Telemetriedaten des betrachteten Fahrzeugs zusammen, und können einander gegenübergestellt werden. Die Darstellungseinrichtung 26 kann demnach ausgebildet sein, um die Telemetriedaten des Fahrzeugs und die Telemetriedaten der ein oder mehreren anderen Fahrzeuge vergleichend darzustellen. Aus der vergleichenden Darstellung kann dann einem Betreiber oder einem Fahrer des Fahrzeugs ein Hinweis gegeben werden, wie sein Fahrverhalten oder sein Fahrstil verbessert werden kann.

Wie bereits oben beschrieben, kann in Ausführungsbeispielen die Kommunikationseinrichtung 24 auch ausgebildet sein, um die Telemetriedaten des Fahrzeugs an eine Datenverarbeitungsvorrichtung 10 zu übertragen. In anderen Worten kann die Kommunikationseinrichtung 24 ausgebildet sein, um nicht nur Daten (Auswertedaten) zu empfangen, sondern auch um Telemetriedaten des betrachteten Fahrzeugs zu senden oder zu übertragen. Beispielsweise kann die Kommunikationseinrichtung 24 ausgebildet sein, um die Telemetriedaten des Fahrzeugs schnurlos (z.B. via Bluetooth) an ein Mobilfunkgerät (z.B. ein Mobilfunkgerät der dritten oder vierten Generation) zu übertragen und über das Mobilfunkgerät an die Datenverarbeitungsvorrichtung 10, wie oben beschrieben, zu übertragen.

Ausführungsbeispiele können daher von einem Sendeempfänger/Mobilfunkgerät Gebrauch machen, dass zur Kommunikation der Daten über ein Mobilfunksystem mit einem Server oder Computer ausgebildet ist, der beispielsweise über Internet bzw. das World Wide Web (WWW) erreichbar ist. Das Mobilfunksystem kann beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), Orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilfunknetz und Mobilfunknetzwerk synonym benutzt.

Im Folgenden wird angenommen, dass ein solches Mobilfunksystem zumindest einen stationären Sendeempfänger im Sinne einer Basisstation umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger umfasst, wobei sich der Begriff mobil hier darauf beziehen soll, dass mit diesem Sendeempfänger über die Luftschnittstelle, d. h. kabellos, kommuniziert wird. Ein solcher mobiler Sendeempfänger kann beispielsweise einem tragbaren Telefon, einem tragbaren Computer oder einem Funkmodul entsprechen, das sich in einem Fahrzeug befindet und mit dem schnurlos oder schnurgebunden von einem oder mehreren Fahrzeugsystemen aus kommuniziert werden kann. Das Mobilfunkgerät kommuniziert dann mit dem Mobilfunknetz jedoch drahtlos. Insofern kann die bereits erwähnte Basisstation einer Basisstation einem der oben erwähnten Standards entsprechen, beispielsweise einer NodeB, einer eNodeB, usw.

In weiteren Ausführungsbeispielen kann die Vorrichtung 20 ferner eine Auswerteeinrichtung 28 umfassen, die in der Fig. 2 mit gestrichelten Linien dargestellt ist, um herauszustellen, dass diese Komponente optional ist. Die Auswerteeinrichtung 28 ist ausgebildet, um die Telemetriedaten des Fahrzeugs und die Telemetrie- oder Auswertedaten der ein oder mehreren anderen Fahrzeuge zu vergleichen und basierend auf den Telemetriedaten des Fahrzeugs Informationen hinsichtlich eines verbesserten Fahrverhaltens für das Fahrzeug zu bestimmen. Insofern kann in Ausführungsbeispielen auch eine Auswertung in dem Fahrzeug erfolgen. Die Auswerteeinrichtung 28 kann insofern als Computer, Prozessor oder programmierbare Hardwarekomponente implementiert sein, bzw. auch als Software implementiert sein, die eine entsprechende Auswertung durchführt, wenn sie auf einem Computer, Prozessor oder einer programmierbaren Hardwarekomponente ausgeführt wird. In Ausführungsbeispielen kann die Auswerteeinrichtung 28 beispielsweise ausgebildet sein, um aus den Telemetrie- oder Auswertedaten der ein oder mehreren anderen Fahrzeuge Kraftstoffverbrauchswerte zu ermitteln. Basierend auf den Telemetriedaten des Fahrzeugs und den Kraftstoffverbrauchswerten kann dann eine Information über verbesserte Schaltpunkte für das Fahrzeug ermittelt werden. Die Darstellungseinrichtung 26 kann dann ausgebildet sein, um die Information über die verbesserten Schaltzeitpunkte darzustellen.

Ausführungsbeispiele schaffen ferner ein Fahrzeug mit einer Vorrichtung 20 gemäß der obigen Beschreibung.

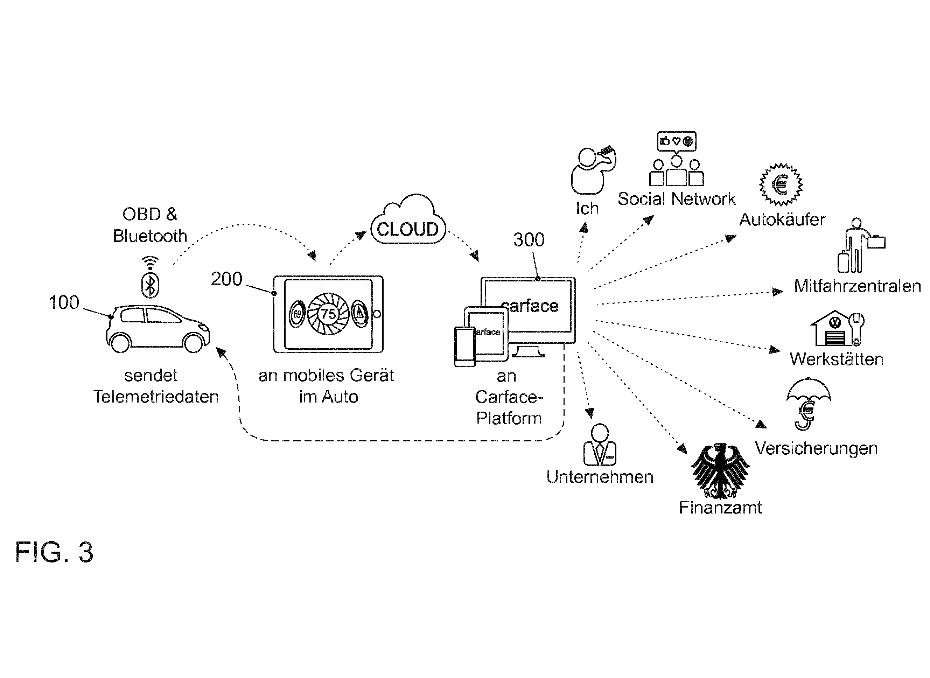

Die Fig. 3 illustriert eine Übersichtsgrafik mit Anwendungsbeispielen verschiedener Ausführungsbeispiele. Die Fig. 3 zeigt ein Fahrzeug 100, das die oben beschriebene Vorrichtung 20 umfasst. Hierbei wird davon ausgegangen, dass die Telemetriedaten des Fahrzeugs 100 aus einem On-Board-Diagnosesystem (OBD) ausgelesen werden (von Englisch "on-board diagnostics", fahrzeuginternes Diagnosesystem) und dann über Bluetooth an ein Mobilfunkgerät 200 übertragen werden, das sich z.B. im Auto, d.h. in dem Fahrzeug 100, befindet. Das Mobilfunkgerät 200 übermittelt die Telemetriedaten weiter an eine Plattform 300, die die oben beschriebene Vorrichtung 10 umfasst. Die dort befindliche Erfassungseinrichtung 12 erfasst dann Telemetriedaten einer Mehrzahl von Fahrzeugen, wobei aus Gründen der Übersichtlichkeit, in der Fig. 3 nur ein einzelnes Fahrzeug gezeigt ist. Gemäß der obigen Beschreibung werden in der Vorrichtung 10, d.h. in der Plattform 300, die im Folgenden auch car face (von Englisch "Gesicht des Autos") -Plattform genannt wird, ausgewertet. Wie die Fig. 3 weiter zeigt, erfolgt dann eine Übertragung der Auswertedaten über das Mobilfunkgerät 200 zurück an die Vorrichtung 20, die sich in dem Fahrzeug 100 befindet. Dort werden dann von der Kommunikationseinrichtung 24, über Bluetooth die Auswertedaten von dem Mobilfunkgerät 200 empfangen. Eine Darstellungseinrichtung 26, die im Folgenden noch im Detail erläutert werden wird, stellt dann die Auswertedaten basierend auf den Telemetriedaten des Fahrzeugs 100 dar.

Wie die Fig. 3 weiter zeigt, kann die Plattform 300, d.h. die Vorrichtung 10, auch ausgebildet sein, um die Auswertedaten an andere Instanzen zu übertragen, wie beispielsweise an einen Fahrer selbst, bzw. an das Mobilfunkgerät 200, das vom Fahrer auch benutzt werden kann, um die Auswertedaten direkt anzuschauen, auch ohne dass sich das Mobilfunkgerät 200 in dem Fahrzeug 100 befindet. Ferner ist es denkbar, dass über eine solche Plattform 300 die Daten in einem sozialen Netzwerk dargestellt werden. Potenzielle Autokäufer könnten die Telemetriedaten einsehen, und somit einen Rückschluss auf das Fahrverhalten des Fahrers ziehen. Darüber hinaus besteht die Möglichkeit der Kommunikation mit Mitfahrzentralen, denen zum Einen eine zurückgelegte Strecke des Fahrzeugs mitgeteilt werden kann, sodass diese sich an den Fahrer zwecks Mitfahrgelegenheit wenden können, oder zum Anderen diese Information auf dem gleichen Weg über das Mobilfunkgerät wieder an das Fahrzeug 100 übertragen werden kann, sodass im Fahrzeug eine Bereitschaft oder eine Anfrage eines Mitfahrers angezeigt werden kann. Es ist beispielsweise denkbar, in dem Fahrzeug basierend auf den Telemetriedaten der anderen Fahrzeuge, bzw. der Auswertedaten, einen Hinweis darauf zu geben, dass andere Fahrzeuge parallel, d.h. im Wesentlichen zeitgleich eine gleiche Strecke zurücklegen, sodass über diesen Mechanismus Fahrgemeinschaften gebildet werden können, die entsprechend reduzierten Verschleiß und Spritverbrauch nach sich ziehen können.

Insofern können Ausführungsbeispiele die Organisation/Bildung von Fahrgemeinschaften unterstützen oder begünstigen. Manche Ausführungsbeispiele können auch beispielsweise ein Schaffen von Vertrauen eines potentiellen Mitfahrers gegenüber dem Mitfahranbieter erlauben und ggf. einen Wettbewerbsvorteil des Mitfahranbieters gegenüber anderen Mitfahranbietern ermöglichen. Wenn beispielsweise eine Mitfahrgelegenheit gesucht wird, kann jemand bevorzugt werden, der ein gutes Fahrverhalten aufweist, weil ein Mitfahrer sich dann bei der ansonsten fremden Person sicherer fühlt. Ggf. wären manche Mitfahrer sogar bereit, dafür zusätzliche Kosten zu tragen. In weiteren Ausführungsbeispielen können auf diese Art und Weise die Preise sogar von der jeweiligen Plattform automatisch errechnet/angepasst werden, z.B. in Abhängigkeit der Anzahl der Mitfahrer, der Strecke, dem Durchschnittsverbrauch des Fahrzeugtyps multipliziert mit einem "carface-Faktor", der für das Fahrverhalten steht.

In anderen Ausführungsbeispielen kann die Plattform 300 die Daten auch Werkstätten zur Verfügung stellen, die entsprechend basierend auf den Daten Ersatzteile, Inspektionstermine, usw. einplanen können. Die Auswertedaten können in weiteren Ausführungsbeispielen auch Versicherungen zur Verfügung gestellt werden, die sich aufgrund der Auswertedaten ein Bild über den Fahrstil des Fahrers machen können, und so etwaige Versicherungsprämien angepasst werden können. In einem weiteren Ausführungsbeispiel ist es denkbar, diese Informationen auch dem Finanzamt bereitzustellen, das so seine Steuer bzw. etwaige Abgaben an den Fahrstil bzw. das Fahrverhalten anpassen könnte. Ein weiteres Ausführungsbeispiel wäre die Bereitstellung der Auswertedaten an Unternehmen, beispielsweise Hersteller des Kraftfahrzeugs, die ihre Weiterentwicklungsmöglichkeiten bzw. Forschungsaktivitäten auf diesen Auswertedaten aufbauen können. Insofern ist in einigen der anhand der Fig. 3 erläuterten Ausführungsbeispielen die Bereitstellungseinrichtung 16 der Vorrichtung 10 dazu ausgebildet, um die Auswertedaten in einem Servicezentrum oder einer Werkstatt für zumindest eines der Mehrzahl von Fahrzeugen bereitzustellen.

In weiteren Ausführungsbeispielen könnte ein Unternehmen seine Fahrzeugflotte mit dem System, d.h. Ausführungsbeispielen der entsprechenden Vorrichtung 20, ausstatten und hätte somit mehr Kontrolle über den Zustand seiner Fahrzeuge und das Fahrverhalten seiner Mitarbeiter. Die Mitarbeiter wiederum würden auf ihr Fahrverhalten achten, weil sie im Vergleich mit anderen Mitarbeitern stehen und sie wissen, dass ihr Fahrverhalten ausgewertet wird. Die Folgen könnten geringerer Verbrauch, geringerer Verschleiß und somit geringere Kosten für das Unternehmen oder eine geringere Umweltbelastung sein.

In Ausführungsbeispielen können die Telemetriedaten demnach Information über zumindest ein Element der Gruppe von Fahrverhalten, Beschleunigungsverhalten, Bremsverhalten, Schaltverhalten, Kraftstoffverbrauch, Kurvenbeschleunigungen, G-Kräfte (von Gravitation), Sicherheitsabstandsverhalten, Betriebseffizienz, Fehlermeldungen aus dem fahrzeuginternen System, Ortsinformationen, Streckeninformationen usw. umfassen. Die Erfassungseinrichtung 12 kann ausgebildet sein, um die Telemetriedaten von den On-Board-Diagnosesystemen der Fahrzeuge zu erhalten.

Ausführungsbeispiele machen demnach von Telemetriedaten von Fahrzeugen Gebrauch. Relevante Telemetriedaten, die Aufschluss über das Fahrverhalten oder den Fahrzeugzustand geben, können beispielsweise über die On-Board-Diagnose (OBD) - Schnittstelle via Bluetooth an das mitgeführte Mobilfunkgerät 200 gesendet werden, wobei das Mobilfunkgerät 200 mit dem Internet verbunden ist. Dort können diese Daten während der Fahrt in Echtzeit in Form von verschiedenen Visualisierungen abgerufen werden, um den Fahrer die Möglichkeit zu geben, sein Fahrverhalten zu kontrollieren und ihn beim ökologischen, effizienten Fahren zu unterstützen. Darüber hinaus können die Daten von einer Anwendung, die im Folgenden auch Carface-Anwendung genannt wird, ausgewertet und langfristig im Internet, beispielsweise in einer Cloud-Anwendung, gespeichert werden. Die gespeicherten Daten können dann jederzeit über die Carface-Plattform 300, z.B. per Applikation (App) oder eine Internetseite, für den Fahrer abrufbar und, falls gewünscht, für Dritte einsehbar sein. Beispielsweise können in einem Fahrzeugprofil Daten zum Fahrzeug, zum Fahrzeugzustand, zum Fahrer und über das langzeitliche Fahrverhalten des Fahrers oder Fahrzeugs gespeichert werden. Ausführungsbeispiele können somit zu einer Selbstüberprüfung und/oder zur Darstellung nach außen dienen.

Ausführungsbeispiele können somit eine Langzeitperspektive bieten. Eine Langzeitmotivation, beispielsweise ökologischer und effizienter zu fahren, kann beispielsweise in der Werterhaltung des eigenen Fahrzeugs liegen. Andere Aspekte, wie beispielsweise die Anerkennung als umweltbewusster Bürger oder das Generieren von Vertrauen gegenüber anderen Personen, können in manchen Ausführungsbeispielen ebenfalls verwirklicht werden. Ausführungsbeispiele können daher die Möglichkeit bieten, ein Fahrverhalten und den Fahrzeugzustand objektiv festzuhalten und auch bewerten zu lassen, was beispielsweise einem Fahrer finanzielle Vorteile verschaffen kann und einen verschleißmindernden Effekt sowie positive Effekte auf die Umwelt haben kann. Beispielsweise wenn ein Auto veräußert werden soll oder wenn Mitfahrgelegenheiten angeboten werden sollen oder gesucht werden, kann eine solche Plattform über die Auswertedaten entsprechende Hinweise liefern. Darüber hinaus sind weitere Boni denkbar, wie beispielsweise Sonderrabatte bei Versicherungen oder Steuerersparnisse für besonders schonende Fahrweisen oder besonders schonendes Fahrverhalten. So ist beispielsweise ein Szenario denkbar, in dem ein Fahrer, der häufiger Gebrauch von Mitfahrgelegenheiten macht, unabhängig ob er diese anbietet oder andere Mitfahrgelegenheiten nutzt, begünstigt wird.

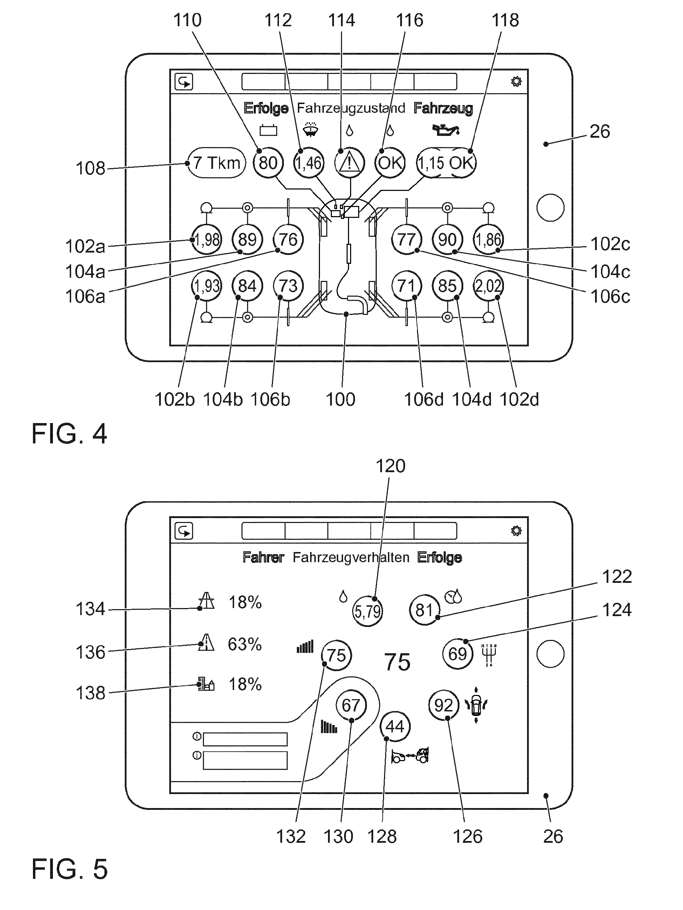

Im Folgenden werden einige Ausführungsbeispiele der Darstellungseinrichtung 26 erläutert. Fig. 4 zeigt eine solche Darstellungseinrichtung in Form eines Displays oder eines Monitors in einem Fahrzeug, wie beispielsweise im Fahrzeug 100, welches in der Fig. 3 gezeigt ist. Auf der Basis der Auswertedaten kann beispielsweise ein Fahrzeugprofil erstellt werden, das unter anderem auch Daten zum Fahrzeug, zum Fahrzeugzustand, zum Fahrer und über das langzeitliche Fahrverhalten darstellt. Eine solche Darstellung kann zum einen der Selbstüberprüfung und zum anderen der Darstellung nach außen dienen. Die Fig. 4 illustriert dabei eine Darstellung von Telemetriedaten in einem Fahrzeug 100. Die Fig. 4 zeigt in der Mitte eine schematische Darstellung des Fahrzeugs 100, dessen Komponenten über verschiedene Anzeigen mit Telemetriedaten belegt sind. So zeigt die Fig. 4 in den Anzeigen 102a, 102b, 102c und 102d die jeweiligen Reifendrücke der vier Räder des Fahrzeugs 100. Jeweils daneben in den Anzeigen 104a, 104b, 104c und 104d wird der Zustand der Bremsbeläge an den vier Rädern angegeben. Neben der Angabe des Zustands der Bremsbeläge werden die Zustände der Stoßdämpfer angegeben, wozu die neben dem Fahrzeug 100 angeordneten Anzeigen 106a, 106b, 106c und 106d dienen. Darüber hinaus zeigt die Fig. 4 eine Anzeige 108, die die Entfernung bis zur nächsten Inspektion anzeigt, hier 7tkm. Die Anzeige 110 zeigt den Zustand der Batterie, die Anzeige 112 den Füllstand der Scheibenreinigerflüssigkeit, die Anzeige 114 den Kühlwasserstand, wobei in der Fig. 4 hier gerade eine Warnung angezeigt wird, die Anzeige 116 den Bremsflüssigkeitszustand und die Anzeige 118 den Ölstand bzw. die Ölqualität. Die Fig. 4 illustriert dabei eine Anzahl von Telemetriedaten, die in dem Fahrzeug 100 erfasst werden können. Der Fahrzeugzustand kann so auf einen Blick angezeigt werden.

In Ausführungsbeispielen kann die Darstellungseinrichtung 26 neben dem genauen Aufschluss über das eigene Fahrverhalten auch Tipps anzeigen, wie die Fahrweise optimiert werden kann, wobei dies basierend auf den Auswertedaten der anderen Fahrzeuge erfolgen kann. Die Fig. 5 zeigt eine kreisförmige Anordnung verschiedener Anzeigen, wobei Anzeige 120 den Kraftstoffverbrauch anzeigt, Anzeige 122 eine Fahreffizienz, Anzeige 124 eine Effizienz des Schaltverhaltens, Anzeige 126 die wirkenden G-Kräfte, Anzeige 128 ein Maß für das Sicherheitsabstandsverhalten, Anzeige 130 ein Maß für die Bremsbeschleunigung und Anzeige 132 ein Maß des Beschleunigungsverhaltens. Darüber hinaus geben die Anzeigen 134, 136 und 138 an, wie viel Prozent der zurückgelegten Strecken auf der Autobahn 134, auf der Landstraße 136 und in der Stadt 138 zurückgelegt wurden. Die Darstellungseinrichtung 26 in dem Ausführungsbeispiel der Fig. 5 verdeutlicht bereits, dass hier die Auswertedaten, d.h. also Daten von anderen Fahrzeugen, bereits in Betracht gezogen wurden. So kann beispielsweise die Schalteffizienz 124 ermittelt werden, indem ein Vergleich mit erreichten Effizienzen, z.B. dem Kraftstoffverbrauch anderer Fahrzeuge, durchgeführt wird.

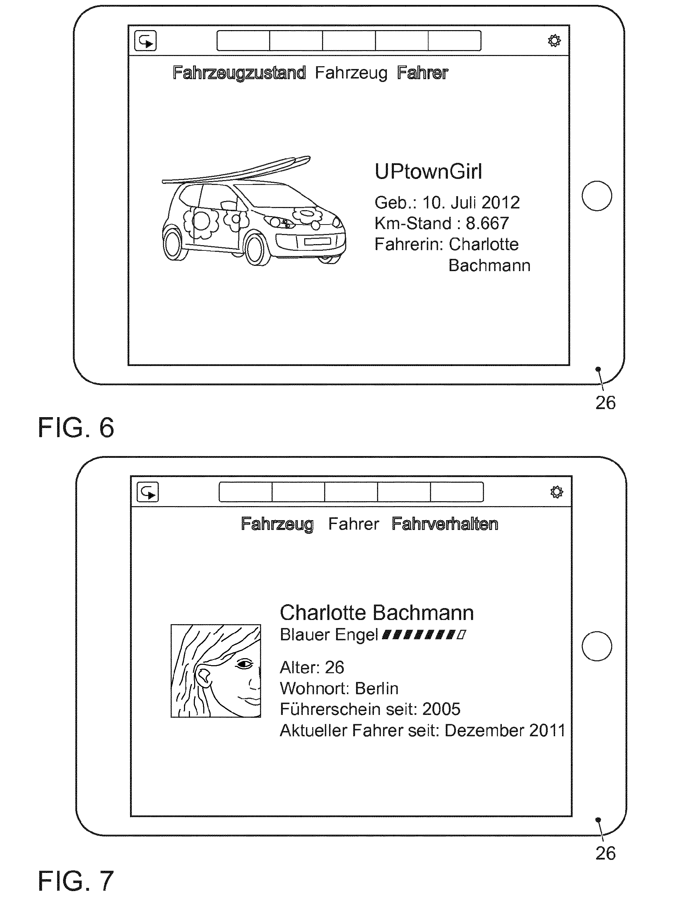

Es sei ferner darauf hingewiesen, dass in Ausführungsbeispielen zwischen den Darstellungen, die in der Fig. 4 und Fig. 5 sowie in den nachfolgenden Figuren gezeigt sind, hin und her geschaltet werden kann. Dies kann beispielsweise durch eine Menüleiste oder Schaltleiste geschehen, die in den folgenden Figuren am oberen Rand der jeweiligen Darstellung gezeigt sind. Die Fig. 6 zeigt ein Symbol, das beispielsweise vom Fahrer für sich selbst oder auch für sein Fahrzeug ausgesucht werden kann. Es kann sich hierbei auch um die beispielhafte Darstellung des Profils eines Fahrzeuges handeln. In gewisser Weise kann das Symbol auch als Symbol für den Fahrer fungieren, da dieser den Avatar unter Umständen selbst gestaltet. Das Symbol kann beispielsweise vom Fahrer ausgesucht werden, um sein Fahrzeug Dritten gegenüber darzustellen, und das Symbol kann unter Umständen personalisiert werden. In Ausführungsbeispielen kann dies beispielsweise ein "Icon" (von Englisch "Zeichen") sein, welches einen individualisierbaren Avatar darstellt. Dem Fahrer kann so die Möglichkeit geboten werden über seine Persönlichkeit etwas auszusagen, und eine verbesserte Darstellung zu erreichen, als dies unter Umständen mit eigenen Fotos möglich wäre.

Die Fig. 7 zeigt eine weitere Darstellung des Fahrers des Fahrzeugs, wie es beispielsweise in einer Käuferbörse möglich wäre, wobei sich der Fahrer mit dem Kraftfahrzeug verbindet, und so Informationen über das Fahrverhalten damit über den Zustand des Fahrzeugs übermittelt werden können. In einer solchen Darstellung ist auch eine Einordnung des Fahrverhaltens in Kategorien denkbar. Die Fig. 7 zeigt eine Einordnung als blauer Engel (auch Englisch "ranking" von "Rangordnung") der beispielsweise auf den ersten Blick etwas darüber aussagen kann, wie ökologisch, konstant und sicher das Fahrzeug vom/von der jeweiligen Fahrer/Fahrerin geführt wurde. Elementare Angaben zum/zur Fahrer/Fahrerin können hier unter Umständen auch angegeben werden, beispielsweise um im Rahmen einer Käuferbörse eine gewisse Seriosität zu wahren.

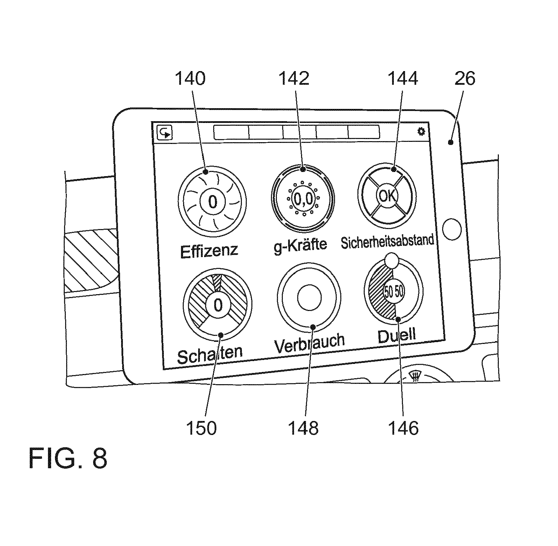

Die Fig. 8 zeigt eine weitere Darstellung der Auswertedaten, wie sie beispielsweise als unterstützende Visualisierung während der Fahrt des Fahrzeugs 100 dargestellt werden kann. Dabei werden sechs Symbole verwendet, wobei Symbol 140 die Effizienz anzeigt, Symbol 142 die wirkenden G-Kräfte, Symbol 144 das Sicherheitsabstandsverhalten, das Symbol 146 einen direkten Vergleich mit einem anderen Fahrzeug in einer "Duell"-darstellung, Symbol 148 ein Maß für die Verbrauchsstatistik und Symbol 150 eine Symbolisierung des Schaltverhaltens. Neben der Langzeitspeicherung hat der Fahrer somit in diesem Ausführungsbeispiel auch während der Fahrt die Möglichkeit, seine Fahrweise zu überprüfen und dementsprechend anzupassen. Insbesondere Symbol 146 zeigt einen Vergleich mit einem anderen KFZ, wobei beispielsweise angezeigt werden kann, ob man hinsichtlich der Effizienz, z.B. bei Auswertekriterium Kraftstoffverbrauch, im direkten Vergleich mit einem anderen Fahrzeug zurückbleibt oder entsprechend verbesserte Werte erreicht.

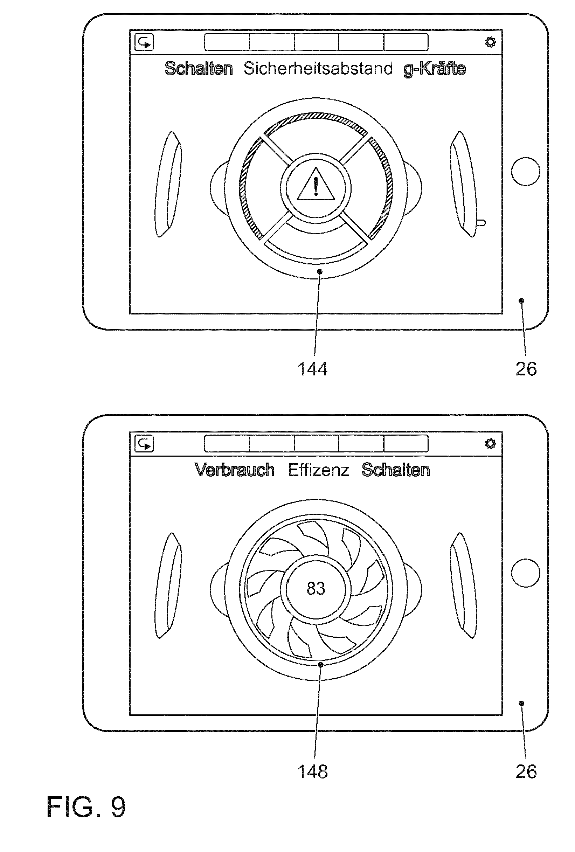

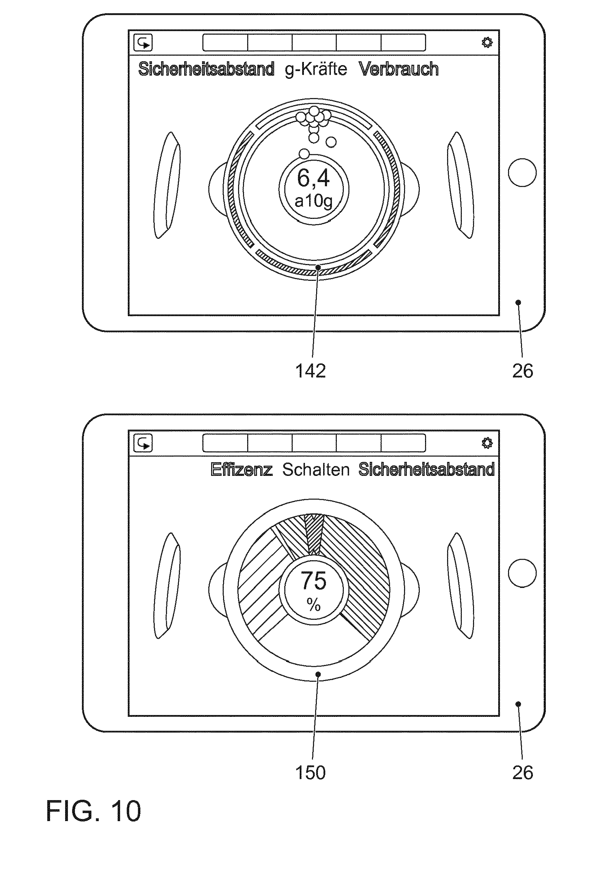

Die Fig. 9 zeigt zwei vergrößerte Darstellungen der Anzeige 144 für den Sicherheitsabstand und der Anzeige 148 für den Kraftstoffverbrauch, wie diese anhand der Fig. 8 erläutert wurden. In diesem Ausführungsbeispiel kann der Fahrer bei zu geringem Sicherheitsabstand in der Darstellung 144 der Fig. 9 gewarnt werden. Zu dicht auffahrende Fahrzeuge können ebenfalls angezeigt werden, werden aber bei der Auswertung entsprechend nicht berücksichtigt. Bei ineffizienter Fahrweise, d.h. bei hohem Kraftstoffverbrauch bei verhältnismäßig niedriger Geschwindigkeit, kann der Fahrer anhand der Anzeige 148 darauf hingewiesen werden, indem sich der gezeigte Rotor schneller dreht oder seine Farbe ändert, beispielsweise orange wird. Die Fig. 10 zeigt zwei vergrößerte Darstellungen der Anzeige 142 für die wirkenden G-Kräfte und der Anzeige 150 für das Schaltverhalten. Die in der Anzeige 142 in der Fig. 10 gezeigten Partikel können durch die Gravitationskräfte beeinflusst werden, beispielsweise hinsichtlich der Bewegung und der Farbe der Partikel. Bei der Anzeige des Schaltverhaltens 150 kann es zum Ziel gesetzt werden, den optimalen Schaltpunkt zu treffen und die Anzeige kann Aufschluss darüber geben, zu welchem Prozentsatz der Schaltvorgänge dies gelungen ist.

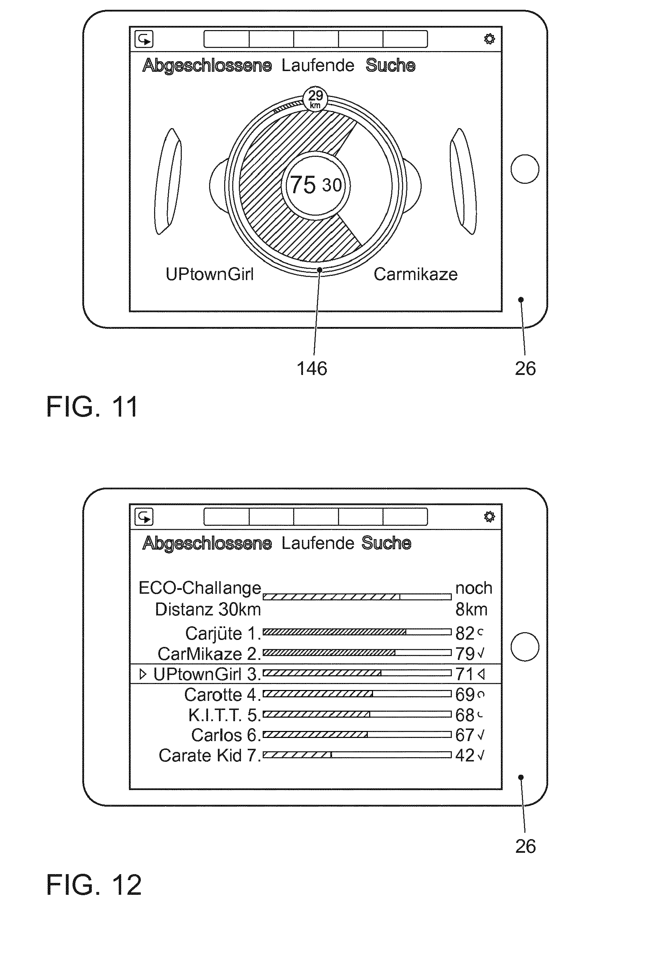

Die Fig. 11 zeigt die Darstellungseinrichtung 26 mit einer Vergrößerung der Anzeige 146 aus der Fig. 8 für das "Duell", d.h. für einen direkten Vergleich mit einem oder mehreren anderen Fahrzeugen. Insofern können Ausführungsbeispiele einen spielerischen Ansatz verfolgen, der für zusätzliche Motivation sorgen kann, sowohl kurzzeitig als auch auf lange Sicht. Ein Fahrer eines Fahrzeugs 100 kann sich somit mit anderen Fahrern messen, z.B. direkt in einem Duell oder mit mehreren Fahrern in einer Challenge, d.h. in einem Wettbewerb. Die Anzeige kann insofern ein Maß dafür sein, inwiefern das Fahrverhalten des betreffenden Fahrers ökonomischer, effizienter, kraftstoffsparender, usw. ist, im Vergleich zu den jeweiligen anderen Fahrern. Insofern können Ausführungsbeispiele Duelle im Rahmen eines Wettbewerbs gegen einen oder mehrere andere Fahrer über eine bestimmte Kilometerzahl ermöglichen. Solange ein Fahrer besser als ein anderer Fahrer fährt, steigt der prozentuale Anteil. Ist die Strecke absolviert, gewinnt derjenige mit dem größeren Anteil. In manchen Ausführungsbeispielen ist es auch denkbar durch technischen K.O. (von Englisch "Knock Out") zu gewinnen, wenn der Anteil vor Ablauf der Strecke auf 100% steigt.

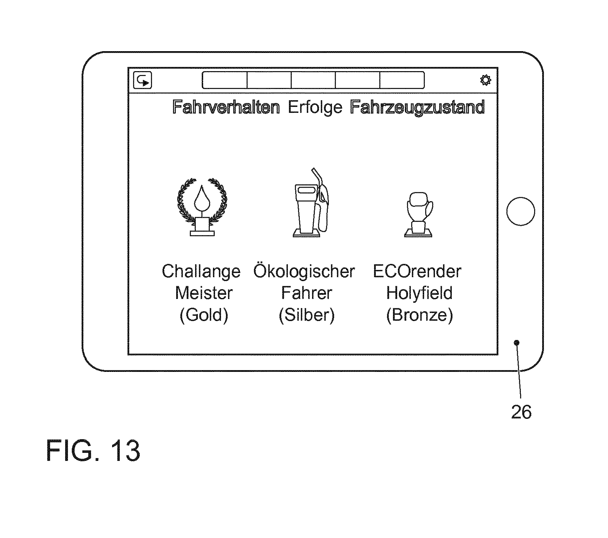

Fig. 12 zeigt die Darstellungseinrichtung 26 in einer Übersichtsdarstellung für einen solchen Wettbewerb. In Fig. 12 zeigt die Darstellungseinrichtung 26 eine Auflistung der teilnehmenden Fahrer und deren Rangliste. Insofern kann eine Challenge oder ein Wettbewerb unter mehreren Fahrern ausgetragen werden. Sie kann auf bestimmten Streckenabschnitten, in definierten Zeitintervallen oder über eine festgelegte Kilometerzahl erfolgen und sich auf verschiedene Disziplinen, z.B. Effizienz, Verbrauch, Bremsverhalten, usw., konzentrieren. Insofern wird auf spielerische Art und Weise einem Fahrer die Möglichkeit geboten, im direkten Vergleich mit anderen Fahrern festzustellen, wie sein Fahrstil einzuordnen ist bzw. wo Verbesserungspotenzial herrscht. In Ausführungsbeispielen kann eine solche auch zeitlich begrenzt, z.B. über eine Woche, sein, d.h. die Teilnehmer müssen nicht zwingend gleichzeitig unterwegs sein. Eine weitere Darstellung ist in der Fig. 13 gezeigt. Die Fig. 13 zeigt die Darstellungseinrichtung 26 mit einer Art Belohnungssymbol für den Fahrer. Für besondere und konstante Leistungen kann eine Vielzahl solcher Belohnungen (auch Englisch "awards") vergeben werden, die man "erspielen" kann, z.B. für gewonnene Duelle und Challenges, für besonders effizientes Fahren, für K.O.-Siege in einem Duell, usw. In anderen Worten kann einem Fahrer aufgrund des Vergleichs und der Auswertung der Telemetriedaten anderer Fahrzeuge durch einfache Symbolik angezeigt werden, wie sein Fahrstil im Vergleich qualitativ eingeordnet wird und damit ein Hinweis auf Verbesserungspotential gegeben werden.

Ausführungsbeispiele bieten so die Möglichkeit Fahrstile und Fahrverhalten unter mehreren Kraftfahrzeugen und Fahrern direkt zu vergleichen und dem jeweiligen Fahrer Informationen über den direkten Vergleich zurückzuliefern, sodass dieser eine Rückmeldung darüber erhält, wie sein Fahrverhalten oder sein Fahrstil im Vergleich einzuordnen ist. Ausführungsbeispiele können somit dem einzelnen Fahrer Verbesserungspotenziale aufzeigen, die beispielsweise auch auf die individuellen Gegebenheiten, wie beispielsweise Art und Bauweise des Fahrzeugs, zurückgelegte Strecke usw. abgestimmt sind.

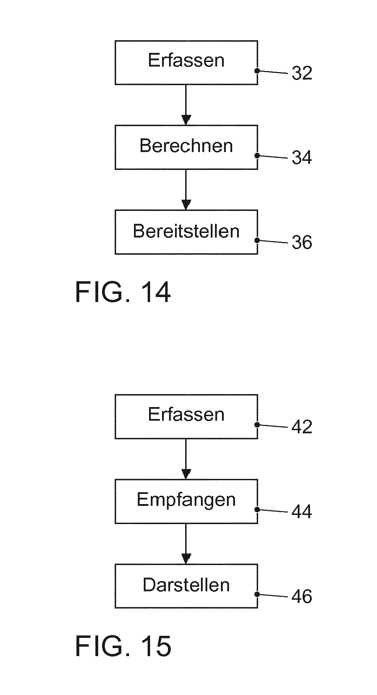

Fig. 14 zeigt ein Ablaufdiagramm eines Ausführungsbeispiels eines Verfahrens zur Verarbeitung von Telemetriedaten von Fahrzeugen. Das Verfahren umfasst ein Erfassen 32 von Telemetriedaten einer Mehrzahl von Fahrzeugen, ein Berechnen 34 von Auswertedaten basierend auf den Telemetriedaten und basierend auf einem Auswertekriterium und ein Bereitstellen 36 der Auswertedaten.

Fig. 15 zeigt ein Ablaufdiagramm eines Ausführungsbeispiels eines Verfahrens zur Darstellung von Telemetriedaten in einem Fahrzeug 100. Das Verfahren umfasst ein Erfassen 42 von Telemetriedaten des Fahrzeugs 10, ein Empfangen 44 von Auswertedaten, die auf Telemetriedaten eines oder mehrerer anderer Fahrzeuge basieren, und ein Darstellen 46 der Auswertedaten basierend auf den Telemetriedaten des Fahrzeugs 100.

Ausführungsbeispiele schaffen darüber hinaus ein Computerprogramm zur Durchführung eines der oben erläuterten Verfahren, wenn das Computerprogramm auf einem Computer, einem Prozessor oder einer programmierbaren Hardwarekomponente abläuft.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computer-lesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung zur Verarbeitung von Telemetriedaten
- 12: Erfassungseinrichtung
- 14: Recheneinrichtung
- 16: Bereitstellungseinrichtung
- 20: Vorrichtung zur Darstellung von Telemetriedaten
- 22: Erfassungseinrichtung
- 24: Kommunikationseinrichtung
- 26: Darstellungseinrichtung
- 28: Auswerteeinrichtung
- 32: Erfassen
- 34: Berechnen
- 36: Bereitstellen
- 42: Erfassen
- 44: Empfangen
- 46: Darstellen
- 100: Fahrzeug
- 102a-d: Reifendruckanzeigen
- 104a-d: Bremsbelagsverschleißanzeigen
- 106a-d: Stoßdämpferverschleißanzeigen
- 108: Distanz bis zur nächsten Inspektion
- 110: Batterieanzeige
- 112: Füllstandsanzeige Scheibenreiniger
- 114: Kühlflüssigkeitsstand
- 116: Bremsflüssigkeitsstand
- 118: Ölstand und Ölqualität
- 120: Kraftstoffverbrauch
- 122: Fahreffizienz
- 124: Effizienz des Schaltverhaltens
- 126: wirkende G-Kräfte
- 128: Sicherheitsabstandsverhalten
- 130: Bremsbeschleunigung
- 132: Beschleunigungsverhaltens
- 134: Prozent der zurückgelegten Strecken auf der Autobahn
- 136: Prozent der zurückgelegten Strecken auf der Landstraße
- 138: Prozent der zurückgelegten Strecken in der Stadt
- 140: Effizienzanzeige
- 142: wirkende G-Kräfte
- 144: Sicherheitsabstandsverhalten
- 146: direkter Vergleich mit einem anderen Fahrzeug in einer "Duell"-darstellung
- 148: Maß für Verbrauchsstatistik
- 150: Symbolisierung des Schaltverhaltens
- 200: Mobilfunkgerät
- 300: Plattform

## Patentansprüche

1. Vorrichtung (10) zur Verarbeitung von Telemetriedaten von Fahrzeugen, mit einer
Erfassungseinrichtung (12) zur Erfassung von Telemetriedaten einer Mehrzahl von Fahrzeugen;
einer Recheneinrichtung (14) zur Berechnung von Auswertedaten basierend auf den Telemetriedaten und basierend auf einem Auswertekriterium; und
einer Bereitstellungseinrichtung (16) zur Bereitstellung der Auswertedaten.

2. Vorrichtung (10) gemäß Anspruch 1, bei der die Bereitstellungseinrichtung (16) ausgebildet ist, um die Auswertedaten zumindest einem der Mehrzahl von Fahrzeugen bereitzustellen.

3. Vorrichtung (10) gemäß einem der vorangehenden Ansprüche, bei der das Auswertekriterium zumindest ein Element der Gruppe von Kraftstoffverbrauch, Verschleiß einer oder mehrerer Fahrzeugkomponenten oder Fahrsicherheit umfasst.

4. Vorrichtung (10) gemäß einem der vorangehenden Ansprüche, bei der die Bereitstellungseinrichtung (16) ausgebildet ist, um die Auswertedaten einem Servicezentrum oder Werkstatt für zumindest eines der Mehrzahl von Fahrzeugen bereitzustellen.

5. Vorrichtung (10) gemäß einem der vorangehenden Ansprüche, bei der die Telemetriedaten Information über zumindest ein Element der Gruppe von Fahrverhalten, Beschleunigungsverhalten, Bremsverhalten, Schaltverhalten, Kraftstoffverbrauch, Kurvenbeschleunigungen, G-Kräfte, Sicherheitsabstandsverhalten, Betriebseffizienz, Fehlermeldungen, Ortsinformationen, oder Streckeninformationen umfassen, und/oder bei der die Erfassungseinrichtung (12) ausgebildet ist, um die Telemetriedaten von Onboard-Diagnose-Systemen der Fahrzeuge zu erhalten.

6. Vorrichtung (20) zur Darstellung von Telemetriedaten in einem Fahrzeug (100), mit
einer Erfassungseinrichtung (22) zur Erfassung von Telemetriedaten des Fahrzeugs (100);
einer Kommunikationseinrichtung (24) zum Empfangen von Auswertedaten, die auf Telemetriedaten eines oder mehrerer anderer Fahrzeuge basieren; und
einer Darstellungseinrichtung (26) zur Darstellung der Auswertedaten basierend auf den Telemetriedaten des Fahrzeugs (100).

7. Vorrichtung (20) gemäß dem vorangehenden Anspruch, bei dem die Darstellungseinrichtung (26) ausgebildet ist, um die Telemetriedaten des Fahrzeugs und die Telemetriedaten oder Auswertedaten der ein oder mehreren anderen Fahrzeug vergleichend darzustellen.

8. Vorrichtung (20) gemäß einem der Ansprüche 6 oder 7, bei der die Kommunikationseinrichtung (24) ausgebildet ist, um die Telemetriedaten des Fahrzeugs (100) an eine Datenverarbeitungsvorrichtung (10) zu übertragen.

9. Vorrichtung (20) gemäß dem vorangehenden Anspruch, bei der die Kommunikationseinrichtung (24) ausgebildet ist, um die Telemetriedaten des Fahrzeugs (100) schnurlos an ein Mobilfunkgerät (200) und über das Mobilfunkgerät (200) an die Datenverarbeitungsvorrichtung (10) zu übertragen.

10. Vorrichtung (20) gemäß einem der Ansprüche 7 bis 9, die ferner eine Auswerteeinrichtung (28) umfasst, wobei die Auswerteeinrichtung (28) ausgebildet ist, um die Telemetriedaten des Fahrzeugs (100) und die Telemetrie- oder Auswertedaten der ein oder mehreren anderen Fahrzeuge zu vergleichen und basierend auf den Telemetriedaten des Fahrzeugs Informationen hinsichtlich eines verbesserten Fahrverhaltens für das Fahrzeug (100) zu bestimmen.

11. Vorrichtung (20) gemäß dem vorangehenden Anspruch, bei der die Auswerteeinrichtung (28) ausgebildet ist, um aus den Telemetrie- oder Auswertedaten der ein oder mehreren anderen Fahrzeuge Kraftstoffverbrauchswerte zu ermitteln, und basierend auf den Telemetriedaten des Fahrzeugs (100) und den Kraftstoffverbrauchswerten Information über verbesserte Schaltzeitpunkte für das Fahrzeug (100) zu ermitteln, wobei die Darstellungseinrichtung (26) ausgebildet ist, um die Information über die verbesserten Schaltzeitpunkte darzustellen.

12. Fahrzeug (100) mit einer Vorrichtung (20) gemäß einem der Ansprüche 7 bis 11.

13. Verfahren zur Verarbeitung von Telemetriedaten von Fahrzeugen, mit
Erfassen (32) von Telemetriedaten einer Mehrzahl von Fahrzeugen;
Berechnen (34) von Auswertedaten basierend auf den Telemetriedaten und basierend auf einem Auswertekriterium; und
Bereitstellen (36) der Auswertedaten.

14. Verfahren zur Darstellung von Telemetriedaten in einem Fahrzeug (100), mit
Erfassen (42) von Telemetriedaten des Fahrzeugs (100);
Empfangen (44) von Auswertedaten, die auf Telemetriedaten eines oder mehrerer anderer Fahrzeuge basieren; und
Darstellen (46) der Auswertedaten basierend auf den Telemetriedaten des Fahrzeugs (100).

15. Computerprogramm zur Durchführung des Verfahrens nach einem der Ansprüche 13 oder 14, wenn das Computerprogramm auf einem Computer, einem Prozessor oder einer programmierbaren Hardwarekomponente abläuft.
